# EUROPÄISCHE PATENTSCHRIFT

(11) **EP 2 546 639 B1**
(45) Veröffentlichungstag und Bekanntmachung des Hinweises auf die Patenterteilung: **01.02.2017**
(21) Anmeldenummer: 12004765.9
(22) Anmeldetag: 26.06.2012
(51) Int. Cl.: G01N 27/90, G01N 27/80

(54) **Vorrichtung zum Bestimmen des Verschleisszustands einer Karbonkeramik-Bremsscheibe**
Device for determining the wear on a carbon ceramic brake disc
Procédé destiné à la détermination de l'état d'usure d'un disque de frein en céramique de carbone

(30) Priorität: 12.07.2011 DE 202011103105 U
(43) Veröffentlichungstag der Anmeldung: 16.01.2013
(60) Teilanmeldung: 16205248.4
(73) Patentinhaber: Proceq SA, 8603 Schwerzenbach (CH)
(72) Erfinder: Brandestini, Marco, 8853 Lachen (CH); Stierli, Peter, 8713 Uerikon (CH)
(74) Vertreter: Sutter, Kurt

(56) Entgegenhaltungen:
- US-A- 5 510 709
- US-A1- 2006 158 181
- US-A1- 2006 170 420
- US-B1- 7 560 920
- "EDDY CURRENT TESTING FOR SAFE COMPONENTS", , 30. April 2011 (2011-04-30), Seiten 1-31, XP55038991, Gefunden im Internet: URL:http://www.foerstergroup.de/Brake-disc -tester.133+M52087573ab0.0.html [gefunden am 2012-09-24]

## Beschreibung

Die Erfindung betrifft eine Vorrichtung zur Bestimmung des Verschleisszustands einer Karbonkeramik-Bremssscheibe, wobei die Vorrichtung mindestens eine Spule zum Erzeugen eines Magnetfelds in der Bremsscheibe und zum Detektieren eines Wirbelstroms in der Bremsscheibe aufweist.

Unter einer "Karbonkeramik-Bremsscheibe" ist dabei eine Bremsscheibe zu verstehen, welche eine Karbonkeramik aufweist, wobei die Karbonkeramik einen keramischen Träger sowie in den Träger eingebettete Kohlenstofffasern besitzt.

Bei solchen Karbonkeramik-Bremsscheiben kommt es aufgrund hoher Betriebstemperaturen zu einer Oxidation der Kohlenstofffasern und so zu einem Verschleiss. Dieser Verschleiss ist durch rein optische Inspektion nicht zuverlässig zu erkennen. Eine bessere Verschleisserkennung erlauben induktive Verfahren. Das dabei angewandte Prinzip beruht auf der Wirbelstromdämpfung; sei es mittels zweier Spulen (EP 1 387 166), die kontinuierlich arbeiten, oder mit einer oder zwei Spulen im Pulsbetrieb (DE 10 2008 051 802). In diesen Schriftstücken wird die hervorragende Korrelation zwischen induktiver Messung und gravimetrischer Bestimmung des Verschleisszustands offengelegt. Als Messgerät dient ein handelsübliches Profometer 5 (www.proceq.com). Dabei ist es nicht notwendig, die Scheibe zu demontieren. Ebenso wird festgehalten, dass die Messwerte unabhängig von der Verschmutzung und dem Vorhandensein von Flüssigkeit sind.

Das weitaus grösste Problem solcher Verfahren liegt in der Tatsache, dass infolge der unvermeidlichen Inhomogenität des Werkstoffes die Messwerte örtlich stark unterschiedlich sind (Schwankungen bis zu 100%). Eine weitere Variation entsteht infolge der im Innern der Scheibe verlaufenden Lüftungskanäle. Ein konventionelles Gerät kann bei einer Verschiebung von wenigen Millimetern einen um mehr als 10% abweichenden Wert anzeigen. Da der prozentuale Abfall des Messwertes zwischen einer neuen und einer ausgedienten Scheibe bei ca. 40 bis 50% liegt, ist eine derartige Ortsabhängigkeit der Messung von grossem Nachteil.

In DE 10 2008 051 802 wird eine Positionierungstechnik mittels einer Schablone und mechanischer Positionierhilfen beschrieben, die sich jedoch als unpraktisch erweist.

In US 7 560 920 und US 5 510 709 werden Vorrichtungen basierend auf dem Wirbelstromprinzip offenbart, deren Magnetspulen jeweils in einem Kreis angeordnet sein können.

Weiter sei festgehalten, dass nur zuverlässige Messwerte dann aufgenommen werden können, wenn das Prüfgerät auf der Scheibe exakt aufliegt, was durch eine Bedienung von Hand in der Servicestelle zusätzliche Anforderungen an die Gestalt des Gerätes mit sich bringt.

Einen weiteren Störfaktor bilden die im eingebauten Zustand vorhandenen metallischen Elemente, wie Bremssattel, -topf, Achsschenkel und Schutzblech.

Es stellt sich deshalb die Aufgabe, eine Vorrichtung der eingangs genannten Art bereitzustellen, die eine zuverlässigere Messung des Verschleisszustands erlaubt. Diese Aufgabe wird von der Vorrichtung gemäss Anspruch 1 gelöst.

Anspruchsgemäss besitzt die mindestens eine Spule also einen bogenförmigen Messbereich. Unter dem Begriff Messbereich ist dabei derjenige Bereich der Messebene zu verstehen, der von der Spule bzw. den Spulen messtechnisch erfasst wird. Insbesondere umfasst der Messbereich diejenigen Orte der Messebene, bei welchen der Fluss eines von der Spule erzeugten Magnetfelds mindestens 50% eines Maximalwerts des Flusses des Magnetfelds beträgt.

Weiter ist die Vorrichtung dadurch gekennzeichnet, sie ein Gehäuse aufweist, an welchem Anschlagmittel zum radialen Anschlagen des Gehäuses an die Bremsscheibe angeordnet sind und
dass die Vorrichtung weiter eine Messoberfläche zum Anlegen an eine Stirnfläche der Bremsscheibe aufweist, wobei die Anschlagsmittel als quer zur Messoberfläche verlaufende Vorsprünge ausgestaltet sind.

Dank den Anschlagmittel ist ein definierter radialer Anschlag an der Bremsscheibe sichergestellt.

Durch einen anspruchsgemäss gestalteten Messbereich kann eine nicht-lokale Messung an der Bremsscheibe durchgeführt werden, welcher die Messung unempfindlicher gegenüber lokalen Inhomogenitäten der Karbonkeramik macht.

Vorzugsweise weist die Vorrichtung mindestens drei Spulen auf, insbesondere mehr als drei Spulen, sowie eine Ansteuerung, um mit den Spulen ein Magnetfeld im Messbereich zu erzeugen.

Weitere bevorzugte Ausführungen der Vorrichtung ergeben sich aus den abhängigen Ansprüchen sowie aus der nun folgenden Beschreibung anhand der Figuren. Dabei zeigen:
Fig. 1 eine perspektivische Ansicht der Vorrichtung,
Fig. 2 eine Ansicht der Vorrichtung angelegt an einer Bremsscheibe,
Fig. 3 eine Darstellung der Messpulen-Anordnung,
Fig. 4 eine schematische Darstellung des Messbereichs an der Bremsscheibe,
Fig. 5 den Messwert als Funktion des Winkels,
Fig. 6 ein Teilblockschaltbild der Vorrichtung und
Fig. 7 eine Ausführung mit zwei Reihen von Messspulen.

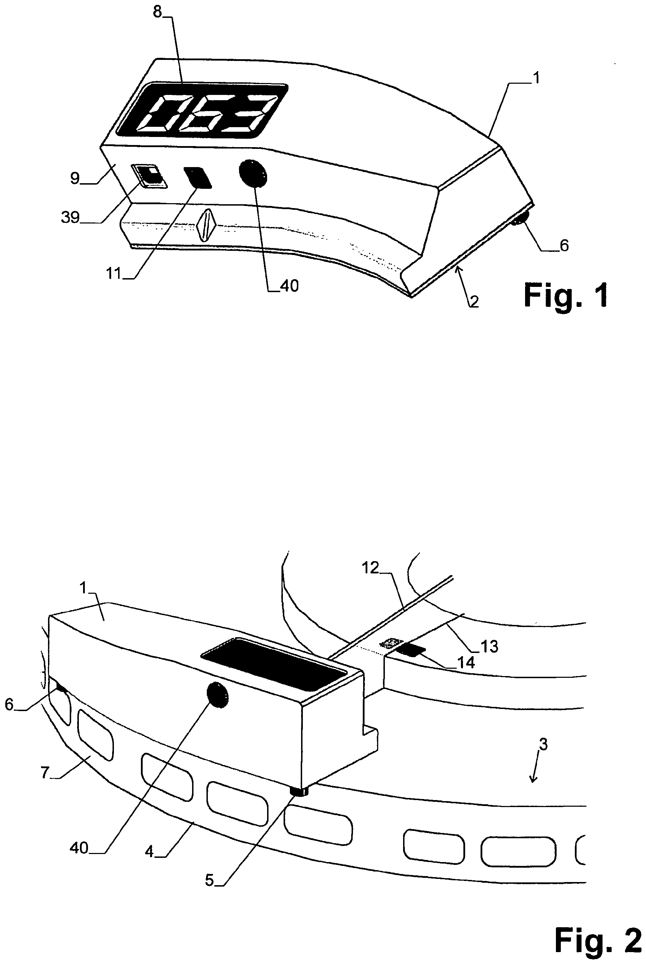

Die Vorrichtung gemäss Fig. 1 besitzt ein Gehäuse 1 mit einer Messoberfläche 2, welche dazu vorgesehen ist, während der Messung an einer Stirnseite 3 der Bremsscheibe 4 anzuliegen (vgl. Fig. 2). Weiter sind am Gehäuse 1 Anschlagmittel 5, 6 vorgesehen, welche sich quer, insbesondere senkrecht, zur Messoberfläche 2 erstrecken. Die Anschlagmittel 5, 6 dienen zum radialen Anschlagen, d.h. der radialen Ausrichtung, des Gehäuses 1 an einer Aussenkante 7 der Bremsscheibe 4. Die Anschlagmittel 5, 6 sind als Vorsprünge ausgestaltet, welche über die Messoberfläche 2 hervorstehen. Vorzugsweise sind genau zwei solche Vorsprünge vorgesehen, damit ein definierter radialer Anschlag an der Bremsscheibe 4 sichergestellt ist.

Die Vorrichtung gemäss Fig. 1 besitzt weiter eine Anzeige 8, vorzugsweise auf der der Messoberfläche 2 gegenüber liegenden Seite des Gehäuses, so dass sie vom Benutzer gut einsehbar ist. Auf einer Seite 9 des Gehäuses 1, welche bei korrekt an der Bremsscheibe 4 angeschlagener Vorrichtung der Achse der Bremsscheibe zugewandt ist, befindet sich eine Lichtquelle 11. Die Lichtquelle 11 umfasst z.B. einen Halbleiterlaser, dessen Lichtstrahl beispielsweise mit einer Zylinderlinse in einer Richtung senkrecht zur Stirnseite 3 zu einem flächigen Lichtfeld 12 aufgefächert wird. Sie dient als Positionierhilfe, indem die Lichtquelle 11 und die Anschlagmittel 5, 6 so zueinander ausgerichtet sind, dass beim bestimmungsgemässen Anschlagen der Vorrichtung an die Bremsscheibe 4 ein auf der Stirnfläche 3 verlaufender Lichtstrich 13 erzeugt wird. Der Benutzer kann den Lichtstrich 13 dazu verwenden, die Vorrichtung in definierter Weise auf eine von mehreren an der Bremsscheibe angebrachten Markierungen 14 azimutal auszurichten. Diese Lösung benötigt keinen zusätzlichen mechanischen Zeiger und eignet sich für alle Scheibenabmessungen. Zur besseren Erkennung ist die Lichtquelle helligkeitsmoduliert.

Der Benutzer kann das Gehäuse 1 in der in Fig. 2 gezeigten Art an die Bremsscheibe anlegen, wobei die Vorsprünge 5, 6 das Gerät radial positionieren, und die Messoberfläche 2 die axiale Positionierung sicherstellt. Um das Gerät an die richtige azimutale Winkelposition zu führen, bewegt der Benutzer es dem Umfang der Bremsscheibe 4 entlang. Um diese Bewegung zu vereinfachen, können die Vorsprünge 5, 6 von Walzen gebildet sein, die auf der Aussenkante 7 der Bremsscheibe 4 abrollen.

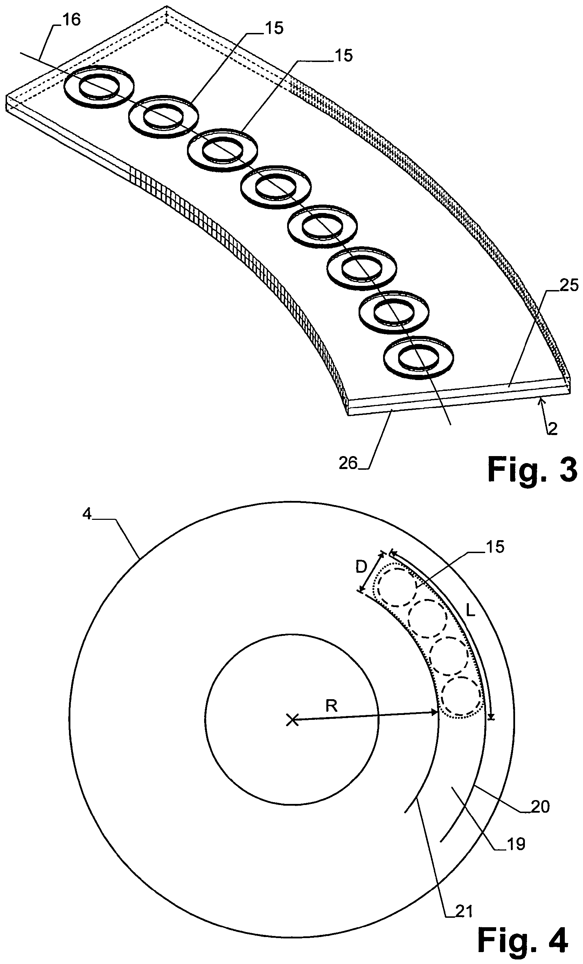

Wie bereits erwähnt, erfolgt die Messung über eine oder mehrere Spulen. Fig. 3 zeigt eine bevorzugte Anordnung mit mehreren Spulen 15. In dieser Ausführung sind die Spulen 15 in einer Reihe nebeneinander angeordnet, derart, dass ihre Zentren auf einer gekrümmten Kurve 16, insbesondere einem Kreissegment, zu liegen kommen.

Die Spulen 15 bilden einen gekrümmten Messbereich 18, wie er gestrichelt in Fig. 4 dargestellt ist. Der Messbereich liegt in einem Ring 19 zwischen zwei konzentrischen Kreislinien 20, 21. Die radiale Dicke D des Rings (d.h. der Abstand der Kreislinien 20, 21) ist kleiner als 2 cm. Die Länge L des Messbereichs tangential zum Ring beträgt mindestens 8 cm. Der innere Radius R des Rings 19 liegt zwischen 10 und 15 cm. Mit einem so gestalteten Messbereich kann ein beträchtlicher Bereich einer üblichen Bremsscheibe erfasst werden, ohne dass metallische Teile der Befestigung oder Randbereiche der Bremsscheibe in den Messbereich fallen.

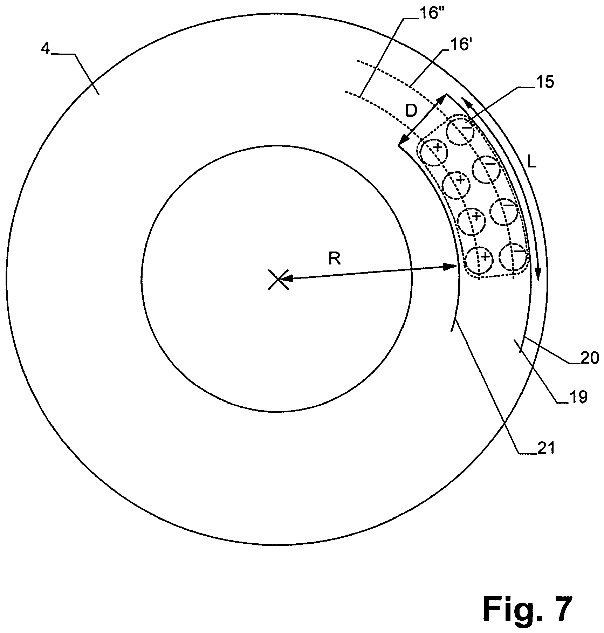

Anstelle einer einzelnen Reihe von Spulen ist es auch denkbar, mindestens zwei Reihen von Spulen zu verwenden. Dies ist in Fig. 7 illustriert, wo die beiden Reihen von Spulen 15 auf zwei parallelen, gekrümmten Kurven 16', 16", insbesondere auf zwei konzentrischen Kreissegmenten, angeordnet sind. Vorzugsweise sind dabei jeweils zwei zueinander benachbarte, auf unterschiedlichen Kurven liegende Spulen 15 antiparallel gepolt, wie dies durch die Zeichen + und - in Fig. 7 illustriert ist. Dadurch wird das Feld der einen Spule in die jeweils benachbarte Spule umgelenkt, wodurch es zwar ein beträchtliches Volumen des Bremsscheibe 4 durchsetzt, aber im Verhältnis hierzu nicht sehr tief in die Bremsscheibe 4 eindringt. Dadurch kann vermieden werden, dass das Feld auf der den Spulen 15 gegenüber liegenden Seite des Bremsscheibe 4 austritt und dort von Metallteilen beeinflusst wird.

Grundsätzlich können auch bei der Ausführung nach Fig. 3 und 4 jeweils zwei zueinander benachbarte Spulen antiparallel gepolt sein. Es zeigt sich jedoch, dass die Verwendung von antiparallel gepolten Spulen in einer Anordnung mit zwei Reihen von Spulen gemäss Fig. 7 besonders vorteilhaft ist.

Der Begriff "antiparallel gepolt" ist dabei so zu verstehen, dass die von den beiden Spulen erzeugten Felder antiparallel zueinander sind. Dies kann z.B. dadurch erreicht werden, dass die beiden Spulen im umgekehrten Drehsinn gewickelt sind und von gleichphasigen Strömen durchflossen werden, oder indem die beiden Spulen im gleichen Drehsinn gewickelt sind und von gegenphasigen Strömen durchflossen werden.

Die in Fig. 3 gezeigten Spulen 15 sind vorzugsweise auf einer gemeinsamen Trägerplatte 25 angeordnet, wodurch deren Montage und gegenseitige Ausrichtung erleichtert wird. Sie sind vorteilhaft als konzentrische Leiterbahnen auf dem Träger 25 ausgeführt, in Form einer mehrschichtigen gedruckten Schaltung.

Die Trägerplatte 25 liegt in der in Fig. 3 gezeigten Ausführung am denjenigen Wandabschnitt 26 des Gehäuses an, der die Messoberfläche 2 bildet, und ist vorzugsweise flächig mit diesem verbunden. Alternativ hierzu kann die Trägerplatte 25 selbst die Aussenwand des Gehäuses und somit die Messoberfläche 2 bilden. Beide diese Ausgestaltungen erlauben es, die Spulen 15 nahe und in sehr gut definierter räumlicher Position relativ zur Oberfläche der Bremsscheibe 4 zu positionieren. Insbesondere ändert sich der Abstand zwischen den Spulen 15 und dem Prüfling nicht, wenn die Andruckkraft variiert wird. Dies ist wichtig, da eine Änderung des Abstands um nur wenige Zehntel Millimeter zu sehr grossen Signalschwankungen führen kann.

Die Spulen 15 haben einen Durchmesser, der ungefähr der halben Dicke des Prüflings entspricht, so dass ihr Feld ausreichend tief in die Bremsscheibe eindringt, ohne dass ein wesentlicher Feldanteil auf der gegenüber liegenden Seite aus der Bremsscheibe austritt. Um diese Anorderungen bei typischen Bremsscheiben zu erfüllen, liegt ein bevorzugter Durchmesser der Spulen 15 im Bereich von 10 - 15 mm. Bei nicht rotationssymmetrischen Spulen handelt es sich hierbei um den Durchmesser tangential zur Bremsscheibe, wenn die Messvorrichtung bestimmungsgemäss an die Bremsscheibe angelegt ist.

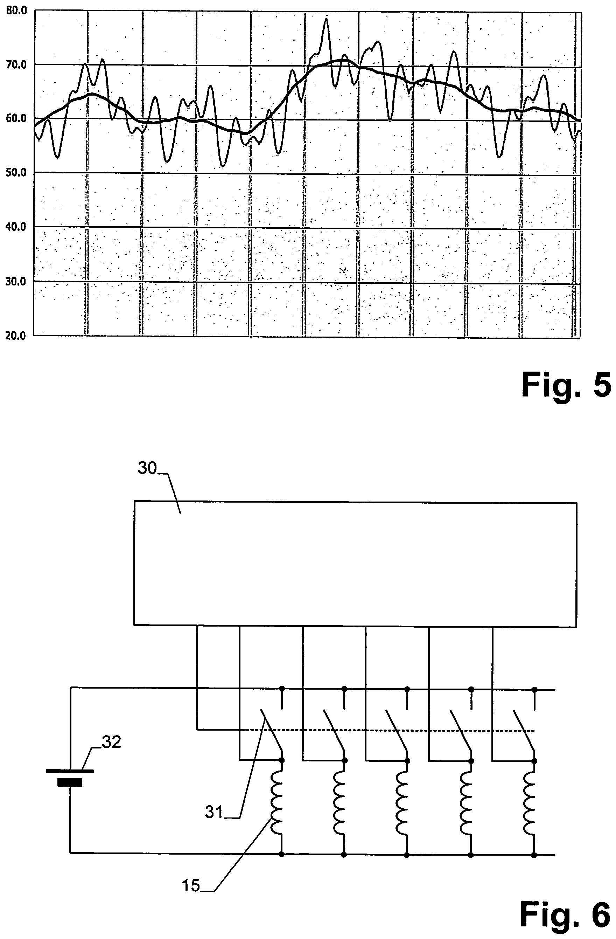

Ein Blick auf Fig. 5 zeigt, dass die gewählte Geometrie die geforderten Ansprüche befriedigt. Die stark wellige Linie entspricht dem Verlauf beim Messen mit einer Einzelspule, deren Durchmesser in etwa der Scheibendicke entspricht. Ein Teil der Modulation entsteht durch die Lüftungskanäle - überlagert und aperiodisch sind die Schwankungen durch die naturgemässe Inhomogenität des Gefüges. Die geglättete Kurve entsteht bei einer Abtastung mit der hier beschriebenen Anordnung. Die vertikale Skala zeigt den Messwert, in einer linearen Einheit, die horizontale Skala den Winkel bzw. die azimutale Position des Geräts entlang der Aussenkante der Bremsscheibe 4.

Fig. 6 zeigt eine mögliche Ausgestaltung der Spulenbeschaltung. Demgemäss ist eine Ansteuerung 30 vorgesehen, welche den Betrieb der Spulen 15 steuert und mittels der Spulen 15 ein Magnetfeld im Messbereich 18 erzeugt. Jeder Spule ist ein elektronischer Schalter 31 zugeordnet, und zwar so, dass die Spulen 15 durch Schliessen der Schalter 31 parallel zueinander mit der Versorgungsspannung von einer Spannungsquelle 32 verbunden werden können. Diese Parallelschaltung erlaubt es, ohne Spannungsumrichter eine Spannungsquelle 32 mit geringer Spannung, wie z.B. eine einfache Batterie, einzusetzen. Werden die Schalter 31 geöffnet, so werden die Spulen von der Versorgungsspannung getrennt. Dabei entsteht über jeder Spule eine Induktionsspannung aufgrund der Wirbelströme in der Bremsscheibe. Diese Induktionsspannungen werden von der Ansteuerung 30 rechnerisch oder elektrisch aufaddiert. Auf diese Weise entsteht ein relativ starkes Signal, obwohl mit einer nur geringen Versorgungsspannung gearbeitet wird.

Vorzugsweise ist die Vorrichtung mit einem Anschluss 39 ausgestattet, um Daten mit externen Geräten auszutauschen, z.B. um durchgeführte Messungen zu protokollieren. Weiter können an der Vorrichtung eine oder mehrere Tasten 40 zum Speichern und/oder Markieren des jeweiligen Messwertes angeordnet sein.

Grundsätzlich denkbar ist es auch, das Gerät mit nur einer Spule auszurüsten, welche einen gebogenen Querschnitt hat. Eine entsprechende Spule besitzt jedoch eine hohe Induktivität, braucht mehr Leistung und ist langsamer im Betrieb. Zudem reicht ihr Feld relativ tief, was die Gefahr mit sich bringt, dass auch hinter der Bremsscheibe angeordnete Bauteile von der Messung erfasst werden. Aus diesen Gründen ist die Verwendung mehrerer Spulen, und insbesondere von mehr als drei Spulen, bevorzugt.

## Patentansprüche

1. Vorrichtung zum Bestimmen des Verschleisszustands einer Karbonkeramik-Bremsscheibe, wobei die Vorrichtung mindestens eine Spule (15) zum Erzeugen eines Magnetfelds in der Bremsscheibe und zum Detektieren eines Wirbelstroms in der Bremsscheibe aufweist, wobei die mindestens eine Spule (15) bzw. Spulen einen bogenförmigen Messbereich (18) besitzt bzw. besitzen,
**dadurch gekennzeichnet, dass** die Vorrichtung ein Gehäuse (1) aufweist, an welchem Anschlagmittel (5, 6) zum radialen Anschlagen des Gehäuses (1) an die Bremsscheibe angeordnet sind und
dass die Vorrichtung weiter eine Messoberfläche (2) zum Anlegen an eine Stirnfläche der Bremsscheibe aufweist, wobei die Anschlagsmittel (5, 6) als quer zur Messoberfläche verlaufende Vorsprünge ausgestaltet sind.

2. Vorrichtung nach Anspruch 1, wobei der bogenförmige Messbereich (18) in einem Ring liegt, wobei eine radiale Dicke (D) des Rings kleiner als 2 cm und ein innerer Radius (R) des Rings zwischen 10 und 15 cm liegt, und wobei eine Länge (L) des Messbereichs (18) tangential zum Ring mindestens 8 cm beträgt.

3. Vorrichtung nach einem der vorangehenden Ansprüche, wobei die Vorrichtung mindestens drei, insbesondere mehr als drei, Spulen (15) aufweist, sowie eine Ansteuerung (30), mit welcher mit den Spulen (15) im Messbereich (18) ein Magnetfeld erzeugbar ist.

4. Vorrichtung nach Anspruch 3, wobei mit der Ansteuerung (30) die Spulen (15) parallel zueinander mit einer Versorgungsspannung verbindbar sind.

5. Vorrichtung nach Anspruch 4, wobei die Ansteuerung (30) dazu ausgestaltet ist, die Spulen (15) von der Versorgungsspannung zu trennen und die bei der Unterbrechung erzeugten Induktionsspannungen über den Spulen (15) aufzusummieren.

6. Vorrichtung nach einem der Ansprüche 3 bis 5, wobei die Spulen (15) auf einer gemeinsamen Trägerplatte (25) angeordnet sind.

7. Vorrichtung nach Anspruch 6, wobei die Spulen (25) als Leiterbahnen auf der Trägerplatte (25) ausgestaltet sind.

8. Vorrichtung nach einem der Ansprüche 3 bis 7, wobei die Zentren der Spulen (25) auf einer gekrümmten Kurve (16), insbesondere einem Kreissegment, liegen.

9. Vorrichtung nach einem der Ansprüche 3 bis 7, wobei die Zentren der Spulen (15) auf mindestens zwei gekrümmten, parallelen Kurven (16'), insbesondere auf mindestens zwei konzentrischen Kreissegmenten, liegen.

10. Vorrichtung nach einem der vorangehenden Ansprüche, wobei jeweils benachbarte Spulen (15) antiparallel gepolt sind.

11. Vorrichtung nach den Ansprüchen 8 und 9, wobei jeweils zwei zueinander benachbarte, auf unterschiedlichen Kurven liegende Spulen (15) antiparallel gepolt sind.

12. Vorrichtung nach Anspruch 6, wobei die Trägerplatte die Messoberfläche (2) bildet oder innenseitig an einem die Messoberfläche (2) bildenden Wandabschnitt (26) anliegt.

13. Vorrichtung nach einem der vorangehenden Ansprüche, wobei die Vorsprünge von Walzen gebildet werden.

14. Vorrichtung nach einem der vorangehenden Ansprüche mit einer Lichtquelle (11) zum Erzeugen eines Lichtfelds (12) als Positionierhilfe.

15. Vorrichtung nach Anspruch 14, wobei die Lichtquelle (11) und die Anschlagmittel (5, 6) so zueinander ausgerichtet sind, dass mit dem Lichtfeld (12) beim Anschlagen der Vorrichtung an die Bremsscheibe ein auf einer Stirnfläche der Bremsscheibe verlaufender Lichtstrich (13) erzeugbar ist.

16. Vorrichtung nach einem der vorangehenden Ansprüche, wobei ein Durchmesser der Spulen (15) zwischen 10 und 15 mm liegt.

## Claims

1. Device for determining wear in a carbon ceramic brake disk, wherein the device comprises at least a coil (15) for generating a magnetic field in the brake disk and for detecting an eddy current in the brake disk, wherein the at least one coil (15) or coils, respectively, has or have an arcuate measuring area (18),
**characterized in that** the device has a housing (1) at which stops (5, 6) are arranged at the brake disk for radially abutting the housing (1) to the brake disk and
**in that** the device further has a measuring surface (2) for placing at a front face of the brake disk, wherein the stops (5, 6) are formed as projections extending obliquely to the measurement surface.

2. Device according to claim 1, wherein the arcuate measuring area (18) is arranged in a ring, wherein a radial thickness (D) of the ring is smaller than 2 cm and an inner radius (R) of the ring is between 10 and 15 cm, and wherein a length (L) of the measuring area (18) tangentially to the ring is at least 8 cm.

3. Device according to one of the preceding claims, wherein the device has at least three, particularly more than three, coils (15), as well as a driver (30) by means of which a magnetic field is generated in the measuring area (18) with the coils (15).

4. Device according to claim 3, wherein the coils (15) are connectable in parallel to each other to a voltage supply by means of the driver (30).

5. Device according to claim 4, wherein the driver (30) is adapted to disconnect the coils (15) from the voltage supply and to sum the inductive voltages generated over the coils (15) after disconnection.

6. Device according to one of the claims 3 to 5, wherein the coils (15) are arranged on a common carrier plate (25).

7. Device according to claim 6, wherein the coils (25) are formed as conductive leads on the carrier plate (25).

8. Device according to one of the claims 3 to 7, wherein the centers of the coils (25) are arranged on an arcuate curve (16), particularly on a segment of a circle.

9. Device according to one of the claims 3 to 7, wherein the centers of the coils (15) are arranged on at least two arcuate, parallel curves (16'), particularly on at least two segments of concentric circles.

10. Device according to one of the preceding claims, wherein mutually neighbouring coils (15) are poled anti-parallel to each other.

11. Device according to claims 8 and 9, wherein each two neighbouring coils (15) on different curves are poled anti-parallel to each other.

12. Device according to claim 6, wherein the carrier plate forms the measuring surface (2) or abuts on an inner side of a wall section (26) forming the measuring surface (2).

13. Device according to one of the preceding claims, wherein the projections are formed by rollers.

14. Device according to one of the preceding claims, with a light source (11) for generating a light field (12) as a positioning aid.

15. Device according to claim 14, wherein the light source (11) and the stops (5, 6) are mutually arranged in such a way that a light strip (13) is generated with the light field (12) on a front face of the brake disk upon abutting the device against the brake disk.

16. Device according to one of the preceding claims, wherein a diameter of the coils (15) is between 10 and 15 mm.

## Revendications

1. Dispositif pour déterminer l'usure dans un disque de frein en céramique, le dispositif comprenant au moins une bobine (15) pour générer un champ magnétique dans le disque de frein et pour détecter un courant de Foucault dans le disque de frein, l'au moins une bobine (15) ou bien les bobines ayant une région de mesure arquée (18),
**caractérisé en ce que** le dispositif a une carcasse (1) où des butées (5, 6) sont arrangées au disque de frein pour buter la carcasse (1) contre le disque de frein et
**en ce que** le dispositif a en outre une surface de mesure (2) pour la placer sur une face avant du disque de frein, les butées (5, 6) étant en forme de protubérances qui s'étendent de manière oblique par rapport à la surface de mesure.

2. Dispositif selon la revendication 1, la région de mesure arquée (18) étant arrangée dans un anneau, une épaisseur radiale (D) de l'anneau étant inférieure à 2 cm et un radius (R) de l'anneau étant entre 10 et 15 cm, et une longueur (L) de la région de mesure (18) tangentielle à l'anneau étant au moins 8 cm.

3. Dispositif selon l'une des revendications précédentes, le dispositif ayant au moins trois, particulièrement plus de trois, bobines (15), ainsi qu'une commande (30) à l'aide de laquelle un champ magnétique est généré dans la région de mesure (18) avec les bobines (15).

4. Dispositif selon la revendication 3, les bobines (15) étant connectables en parallèle l'une avec l'autre avec une source de tension à l'aide de la commande (30).

5. Dispositif selon la revendication 4, la commande (30) étant adaptée à déconnecter les bobines (15) de la source de tension et à additionner les tensions inductives générées aux bornes des bobines (15) après la déconnection.

6. Dispositif selon l'une des revendications 3 à 5, les bobines (15) étant arrangées sur une plaque de support (25) commune.

7. Dispositif selon la revendication 6, les bobines (25) étant en forme de conducteurs sur la plaque de support (25).

8. Dispositif selon l'une des revendications 3 à 7, les centres des bobines (25) étant arrangés sur une courbe arquée (16), particulièrement sur un segment d'un cercle.

9. Dispositif selon l'une des revendications 3 à 7, les centres des bobines (15) étant arrangés sur au moins deux courbes arquées et parallèles (16'), particulièrement sur au moins deux segments des cercles concentriques.

10. Dispositif selon l'une des revendications précédentes, des bobines (15) voisines étant polarisées de manière antiparallèle l'une par rapport à l'autre.

11. Dispositif selon les revendications 8 et 9, chaque deux bobines voisines (15) sur des courbes différentes étant polarisées de manière antiparallèle l'une par rapport à l'autre.

12. Dispositif selon la revendication 6, la plaque de support formant la surface de mesure (2) ou butant contre une face intérieure d'une section de paroi (26) formant la surface de mesure (2).

13. Dispositif selon l'une des revendications précédentes, les protubérances étant formées par des rouleaux.

14. Dispositif selon l'une des revendications précédentes, avec une source de lumière (11) pour générer un champ de lumière (12) comme aide de positionnement.

15. Dispositif selon la revendication 14, la source de lumière (11) et les butées (5, 6) étant arrangées l'une par rapport à l'autre de sorte qu'une bande lumineuse (13) soit générée avec le champ de lumière (12) sur une face avant du disque de frein après avoir abouti le dispositif contre le disque de frein.

16. Dispositif selon l'une des revendications précédentes, un diamètre des bobines (15) étant compris entre 10 et 15 mm.
